# EUROPEAN PATENT SPECIFICATION

(11) **EP 3 490 345 B1**
(45) Date of publication and mention of the grant of the patent: **28.04.2021**
(21) Application number: 17203401.9
(22) Date of filing: 23.11.2017
(51) Int. Cl.: H05B 47/105, H05B 47/19

(54) **LIGHTING SYSTEM FOR USE IN A BUILDING, AND METHOD OF DELIVERING A LIGHTING SYSTEM**
BELEUCHTUNGSSYSTEM ZUR VERWENDUNG IN EINEM GEBÄUDE UND VERFAHREN ZUR BEREITSTELLUNG EINES BELEUCHTUNGSSYSTEMS
SYSTÈME D'ÉCLAIRAGE DESTINÉ À ÊTRE UTILISÉ DANS UN BÂTIMENT ET PROCÉDÉ DE DISTRIBUTION D'UN SYSTÈME D'ÉCLAIRAGE

(43) Date of publication of application: 29.05.2019
(73) Proprietor: Bellman & Symfon Europe AB, 436 32 Askim (SE)
(72) Inventor: JUNGVID, Peter, 436 50 Hovås (SE); GJAERUM, Peer, 433 32 Partille (SE)
(74) Representative: Müller Verweyen

(56) References cited:
- US-A1- 2009 051 524
- US-A1- 2010 231 400

## Description

The invention relates to a lighting system for use in a building like private home, nursing home, retirement home or hospital, in particular for elderly people. The invention also relates to method of delivering a lighting system to a customer.

In dim light or darkness, eyes adapt by widening the pupils to let in light. In the aging eye, these muscles weaken and the dark adaptation is slower. Therefore, during nighttime trips to the bathroom it becomes generally harder for elderly people to find their way.

Accidents from falling are a significant health issue for older people, often leading to hospitalization, and in some cases prove to be fatal. Many of these accidents occur when getting up in the dark at night, when you are most likely to be unstable on your feet or disorientated from sleeping.

US 2010/0231400 A1 discloses a lighting system according to the preamble of claim 1.

The problem underlying the present invention is to provide a lighting system for home use to prevent people falling when getting up in the night and going for example to the bathroom.

The invention solves this problem with the features of the independent claims.

The inventive lighting system provides at least one light source device comprising or connectable to a light emitter and a wireless receiver, and at least one bed exit sensing device to be placed in a bed and adapted to detect a person leaving the bed. The bed exit sensing device comprises a wireless transmitter to control the light source device through wireless transmission in response to detecting a person leaving the bed, in order to switch on said light source device. In this manner, if a person gets up in the night, the way from the bedroom to a destination, for example the bathroom, is automatically illuminated, allowing a safe passage of the person from the bed to the bathroom or other destination The lighting system further comprises at least one switch device adapted to be mounted over a wall-mounted light switch, after the wall-mounted light switch has been put in "on" position, such that the wall-mounted light switch cannot be operated any longer.

The switch device, and preferably at least one further switch device of the lighting system, comprises a switch and a further wireless transmitter to control the at least one light source device through wireless transmission in response to operating said switch, in order to switch on or off said light source device. In this manner, the person can switch off the light as soon as he is back in bed, or more generally as soon as he does no longer require illumination, avoiding that the light from the light source device unnecessarily disturbs anyone.

In particular, if the bed exit sensing device is capable of detecting entering or re-entering of a person into the bed, it could in response switch off the light source devices.

In a preferred embodiment, the lighting system comprises a plurality of light source devices each comprising or connectable to a light emitter, and each comprising a wireless receiver. This allows to illuminate the bedroom and the destination area, like the bathroom, and by possibly using more than two light source devices also a corridor or space between the bed and the destination.

In an embodiment with a plurality of light switch devices, a master switch device acting on all light source devices can be provided. This master switch can advantageously be placed in the bedroom in or near the bed, allowing the user to switch off all lights after the user has safely reached the bed again. Preferably a slave switch device acting on only one light source device, or a sub-group of all light source devices, can be provided. Such a slave switch device can advantageously be placed in the bathroom, for example, allowing the user to switch off the bathroom light individually if he is finished in the bathroom, allowing to reduce energy consumption, and also to allow normal use of the bathroom light during the day.

The lighting system preferably comprises at least one ambient light sensor, allowing to control the brightness of the light source device depending on the ambient light intensity provided by the at least one ambient light sensor. In particular, during nighttime, i.e. in case the ambient light intensity provided by the at least one ambient light sensor falls below a threshold, the brightness of the light source device is preferably controlled to a relatively low level if the light source device is switched on, in order not to disturb and fully awake the people in the bedroom, allowing the sleeping people to continue sleeping, and the user leaving bed to find back to sleep easily after having returned to bed.

On the other hand, during daytime, i.e. in case the ambient light intensity provided by the at least one ambient light sensor exceeds a threshold, the brightness of the light source device is preferably controlled to a maximum level if the light source device is switched on, allowing full illumination.

Preferably the at least one bed exit sensing device and/or the at least one switch device are battery powered wireless devices. This gives maximum flexibility in positioning the bed exit sensing device and/or the switch device, and avoids undesired wire connections.

Preferably the transmitters and receivers in the lighting system communicate to each other via Bluetooth protocol, which allows a very stable and reliable communication over sufficiently large distances and is easy to set-up by the user. In a very preferred embodiment, the transmitters and receivers in the lighting system are connected to each other in a Bluetooth Mesh, which allows to extend the range of the lighting system. Other wireless protocols may be used for communication between transmitters and receivers in the lighting system, like ZigBee, Z-Wave, WiFi, Thread, etc.

Another aspect of the invention refers to a method of delivering an inventive lighting system to a customer in a package. Here it is advantageous if the wireless transmitters and the wireless receivers in the lighting system are paired for wireless communication in advance before packaging the lighting system for delivery. This reduces the configuration effort for the user to a minimum, allowing to use the lighting system essentially out of the package.

In the following the invention shall be illustrated on the basis of preferred embodiments with reference to the accompanying drawings, wherein:

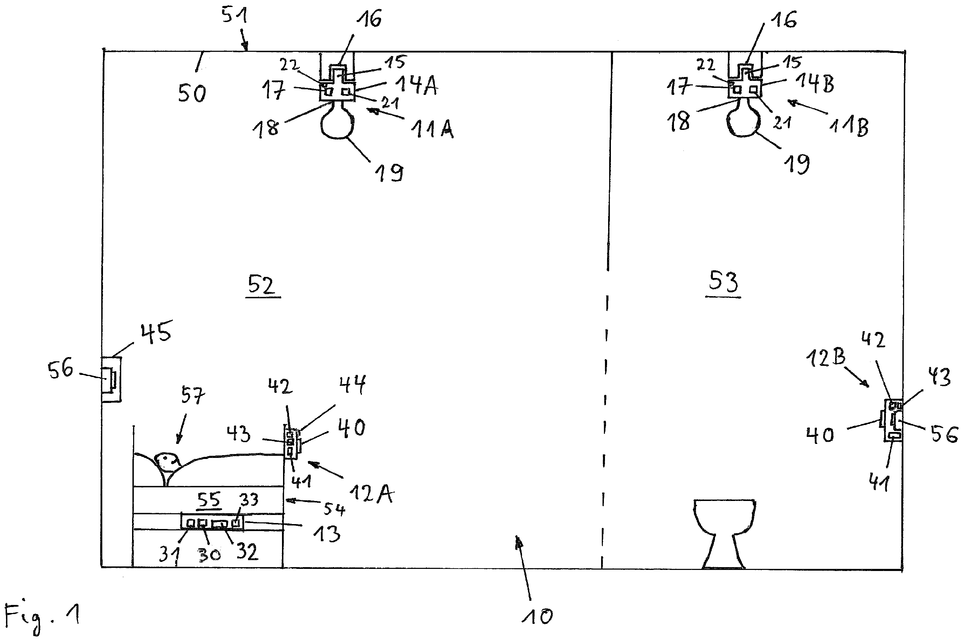

Fig. 1 shows a schematic view of a lighting system in an embodiment of the invention.

The lighting system 10 shown in Figure 1 comprises at least one, preferably a plurality, here two light source devices 11A, 11B, at least one bed exit sensing device 13, and preferably at least one, preferably a plurality, here two switch devices 12A, 12B.

Each of the light source devices 11A, 11B comprises a base part 14A, 14B. The base part 14A, 14B preferably comprises an electrical connector 15 adapted to be connected to, for example screwed into, an electrical socket 16. The electrical socket 16 may for example be a light bulb socket, like an Edison screw socket, for example an E27 or E14 socket, or any other electrical socket. The electrical socket 16 is preferably ceiling mounted at the ceiling 50 of a building 51, like private home or nursing home. However, applications with wall mounted electrical sockets 16 are possible. In the above described embodiments, power supply of the light source devices 11A, 11B is provided by AC mains (public electrical grid) through the electrical socket 16.

In other possible embodiments, the light source device 11A, 11B may be battery powered, which has the advantage that the functioning of the lighting system 10 does not depend on AC mains supply. Also, the position of the light source device 11A, 11B is not restricted to the position of the electrical sockets 16. The base part 14A, 14B would preferably comprise an electric battery in these embodiments. The base part 14A, 14B then does not need to have an electrical connector 15. IN particular in battery powered embodiments, the light source device 11A, 11B preferably comprises a fastener for fastening the light source device 11A, 11B to a wall or ceiling of a building. It is possible that the fastener is a mechanical connector mechanically fitting into an electrical socket 16 without establishing an electric connection.

In still other embodiments, the light source device 11A, 11B can be electrically connectable to AC mains through any electrical connection, not restricted to a lightbulb socket, for example by an electric plug-socket connection. This is preferable for example in applications where the light source devices 11A, 11B are intended to be wall mounted.

The base part 14A, 14B comprises a wireless receiver 17, preferably in the form of a wireless transceiver adapted to receive and transmit communication data through wireless communication. This will be explained later in more detail.

Furthermore, the base part 14A, 14B comprises an electrical interface 18 to a light emitting device 19. As usual, the light emitter 19 is adapted to emit light upon being supplied with electrical power by the base part 14A, 14B through the electrical interface 18, in order to illuminate the rooms 52, 53 in which the light source devices 11A, 11B are arranged.

The base part 14A, 14B furthermore comprises a digital controller 21, like a microcontroller or microprocessor, configured to control the wireless receiver 17 for digital communication, and to control power supply of the electrical interface 18 and, therefore, of the light emitter 19.

In a preferred embodiment, the base part 14A, 14B and the light emitter 19 are fixedly connected to each other in a non-separable way, such that the light source device 11A, 11B is a single unit.

In another possible embodiment, the base part 14A, 14B of the light source device 11A, 11B and the light emitter 19 are separate and separable devices. In this case, conventional light emitters 19, like conventional light bulbs, without wireless receiver 17 can be used. The electrical interface 18 between the base part 14A, 14B and the light emitter 19 may in this case comprise an electrical socket, like a lightbulb socket, for example an Edison screw socket.

The bed exit sensing device 13 comprises a movement sensor 30, like a pressure sensor or a piezo-electric sensor, which is to be placed in or on a bed 54 or in other mechanical relation to the bed, or to be connected to the bed 54, for example on or under the mattress 55. Furthermore, the bed exit sensing device 13 comprises a digital controller 33, like a microcontroller or microprocessor. The digital controller 33 is adapted to monitor movement of a person in the bed 54 by processsing the signals from the movement sensor 30, and based on evaluation of the person's movement, to determine a time point when the person is leaving the bed. The digital controller 33 can preferably also be adapted to determine a point of time when a person is entering or re-entering the bed 54 based on evaluation of the person's movement.

Furthermore, the bed exit sensing device 13 comprises a wireless transmitter 31, preferably in the form of a wireless transceiver adapted to receive and transmit communication data through wireless communication, and in particular to wirelessly communicate with the receiver 17 of the light source device 11A, 11B. The digital controller 33 is configured to control the wireless transmitter 31 for digital communication.

Preferably, the bed exit sensing device 13 is battery powered, i.e., it comprises an electric battery 32. This has the advantage that the functioning of the bed exit sensing device 13 does not depend on AC mains supply, and electric wiring between the bed exit sensing device 13 and stationary AC power plugs can be avoided. However, embodiments of the bed exit sensing device 13 having AC power supply through electric wiring are possible.

Each switch device 12A, 12B comprises a switch 40 for manually switching ON and OFF said light source devices 11A, 11B, and a wireless transmitter 42, preferably in the form of a wireless transceiver adapted to receive and transmit communication data through wireless communication, and in particular to wirelessly communicate with the receiver 17 of the light source device 11A, 11B. Each switch device 12A, 12B also comprises a digital controller 43 configured to control the wireless transmitter 42 for digital communication.

The transmitter 31 of the bed exit sensing device 13, the transmitters 42 of the switch devices 12A, 12B and the receivers 17 of the light source devices 11A, 11B preferably communicate to each other via Bluetooth protocol. In a preferred embodiment, the transmitters 31, 42 and the receivers 17 are connected to each other in a Bluetooth Mesh, which allows to extend the range of the lighting system 10.

Preferably, the switch device 12A, 12B is battery powered, i.e., it comprises an electric battery 41. This has the advantage that the functioning of the switch device 12A, 12B does not depend on AC mains supply, and electric wiring between the switch device 12A, 12B and stationary AC power plugs or sockets can be avoided. However, embodiments of the switch device 12A, 12B having AC power supply connection through electric wiring are possible.

To each switch device 12A, 12B one or a plurality of said light source devices 11A, 11B is assigned. Each switch 40 may for example comprise an "on" area, for example the upper area of the switch 40, and an "off" area, for example the lower area of the switch 40, where pressing the switch 40 on the "on" area or the "off" area turns on or off, respectively, the corresponding light source devices 11A, 11B assigned to the switch device 12A, 12B. Other designs of the switches 40 are possible, for example toggle switch, rocker switch, push button switch, dimmer, touch switch or any other suitable design.

At least one light switch device 12A can be configured to switch on or off all light source devices 11A, 11B in response to operating its switch 40. In other words, all light source devices 11A, 11B of the lighting system 10 are assigned to this light switch device 12A, which can be called master switch device 12A. In a home application involving a bedroom 52 and a bathroom 53, the master switch device 12A is preferably arranged in the bedroom 52, more preferably mounted to the bed 54 or to a wall close to the bed 54, such that the master switch device 12A can preferably be operated by a person sitting on or lying in the bed 54.

At least one light switch device 12B can be configured to switch on or off only one light source device 11B, or a subgroup of all light source devices 11A, 11B, in response to operating its switch 40. In other words, only one light source device 11B, or a subgroup of all light source devices 11A, 11B, is/are assigned to this light switch device 12B, which can be called slave switch device 12B. The at least one other light source device 11A not assigned to the slave switch device 12B is unaffected by operating its switch 40. In a home application involving a bedroom 52 and a bathroom 53, the slave switch device 12B is preferably arranged in the bathroom 53, more preferably mounted to a wall of the bathroom 53.

In the present embodiment, one of the light source devices 11A and the master switch devices 12A are arranged in a bedroom 52 and one of the light source devices 11B and the slave switch device 12B are arranged in a bathroom 53. Of course, more than two light source devices 11A, 11B and/or more than two switch devices 12A, 12B can be provided. For example, if a hallway or corridor is present between the bedroom 52 and the bathroom 53, or if the distance between the bed 54 and the bathroom 53 is large, one or more additional light source devices 11 designed in the same manner as the light source devices 11A, 11B may be provided. Such additional devices 11 are preferably assigned to the master bedroom switch 12A, only, and therefore operate in parallel to the light source device 11A arranged in the bedroom 52.

The lighting system 10 preferably comprises at least one optical battery level or status indicator 44, for example comprising one or more LED. The optical indicator 44 indicates when the charge level of a battery 32, 41 comprised in the system 10 falls below a threshold and therefore should be replaced. The optical indicator 44 is preferably arranged in a switch device 12A which can be best visible to the user. Generally, to make the system easy to use and less complex, one optical indicator 44 in the whole system 10 can be sufficient. In this case, all battery powered devices 13, 12A, 12B are adapted to send a battery low signal to the device (here the master switch device 12A) containing the optical indicator 44. If the optical indicator 44 indicates battery low, the user shall replace all batteries 32, 41 in the system.

In other embodiments, more than one or all of said switch devices 12A, 12B comprises an optical indicator 44. It is also possible that the optical indicator 44 is arranged in a light source device 11A, 11B, which has the advantage that the optical indicator 44 does not consume battery power if the light source device 11A, 11B is connected to AC mains. It is also possible that the optical indicator 44 is arranged in the bed exit sensing device 13 if it is at least partly visible in operation condition.

In some embodiments, the status indicator 44 is adapted to indicate which of the batteries 32, 41 in the system 10 has a low charge level. This may be done for example by a plurality of LED's, an iconic or alphanumeric code, or color coding. It is also possible to provide a plurality of optical indicators corresponding to the plurality of batteries 32, 41 in the system 10.

In case the battery 32 is low in a device 13 having no battery level indicator 44 (for example the bed exit sensing device 13 being fully covered by the mattress 55 and therefore not visible to the user), the device 13 under consideration is adapted to send a wireless signal indicating a low level battery to a device 12A, 12B having a battery level indicator 44, enabling the device 12A, 12B to indicate low battery level in the device 13 having no battery level indicator 44.

The system 10 preferably comprises at least one ambient light sensor 22. The ambient light sensor 22 is preferably arranged in the base part 14A, 14B of the light source device 11A, 11B. This has the advantage that the ambient light sensor does not consume battery power if the light source device 11A, 11B is connected to AC mains. In other embodiments, the ambient light sensor 22 is arranged in the switch device 12A, 12B and/or in the bed exit sensing device 13 if it is at least partly visible.

The brightness of the light source devices 11A, 11B is controlled depending on the ambient light intensity provided by the ambient light sensor 22. In particular, the brightness of the light source devices 11A, 11B is controlled to a low level in case the ambient light intensity provided by the ambient light sensor 22 falls below a threshold, indicating night time, in order to avoid that people fully wake up and cannot get to sleep any more when back in bed. Here, a low level means significantly lower than the maximum brightness, for example at most 75% of maximum brightness, preferably at most 50% of maximum brightness. On the other hand, the brightness of the light source devices 11A, 11B is controlled to full or maximum level in case the ambient light intensity provided by the ambient light sensor 22 is above a threshold, indicating day time, in order to allow maximum illumination in case the light is not disturbing people. In order to allow the above described brightness control of the light emitters 19, the light source devices 11A, 11B are preferably dimmable.

If the light source devices 11A, 11B replace conventional lights, for example by screwing out conventional light bulbs and screwing in light source devices 11A, 11B into the lightbulb sockets 16, it is important to prohibit operation of the conventional wall mounted light switches 56 which could cause unintentional disruption of power supply of the light source devices 11A, 11B and thus jeopardize the function of the lighting system 10. Therefore, a switch device, here for example the switch device 12B of the bathroom 53, is adapted to be mounted over a wall-mounted light switch 56 after the wall-mounted light switch 56 has been put in "on" position, such that the wall-mounted light switch 56 cannot be operated any longer.

The lighting system may additionally comprise a cover 45 to be mounted over a wall-mounted light switch 56 after the wall-mounted light switch 56 has been put in "on" position, such that the wall-mounted light switch 56 cannot be operated any longer.

In the following, a method of using the lighting system 10 on a home application involving bedroom 52 and adjacent bathroom 53 is explained by way of example.

When in the night a person 57 wakes up and gets up, the bed exit sensing device 13 is adapted to determine through the movement sensor 30 and data processing in the digital controller 33 when the person 57 leaves, or is about to leave the bed, for example when the person 57 already sits on the bed. In this moment, the bed exit sensing device 13 sends out a wireless message indicating bed exit through the wireless transmitter 31.

The bed exit message is received by the wireless receivers 17 of the light source devices 11A, 11B. In response to receiving the bed exit message, the digital controller 21 of the light source devices 11A, 11B supplies power to the electrical interface 18 in order to switch the light bulbs 19 on, but not to full brightness, but to a lower brightness sufficient to illuminate the way from the bed 54 to the bathroom 53, but not so high that it disturbs the people in the bedroom 52 and fully wakes them up.

The illumination of the way from the bed 54 to the bathroom 53 by the light source devices 11A, 11B allows a safe passage of the person 57 to the bathroom. When the person is finished in the bathroom, he or she can manually switch off the bathroom light 11B, only, by operating the switch 40 of the bathroom switch device 12B. However, this is not necessary, as will become evident below.

After leaving the bathroom 53, the bedroom light 11A illuminates the way back into bed 54 and thus significantly reduces the danger of falling. When the person 54 has arrived in bed, he can manually switch off the bedroom light 11A by operating the switch 40 of the bedroom switch device 12A, which is preferably positioned to be operated out of bed 54. If in this situation the bathroom light 11B is still on, it is switched off together with the bedroom light 11A. If the bathroom light 11B has already been switched off, it is kept switched off.

Embodiments without switch devices 12A are possible as well. In particular, if the bed exit sensing device 13 is capable of detecting entering or re-entering of a person 57 into the bed 54, it could in response switch off the light source devices 11A, 11B.

Also possible are embodiments with a plurality of bed exit sensing devices 13. For example, in a double bed two bed exit sensing devices 13 could be provided. In such embodiments, each bed exit sensing device 13 independently switches on the light source devices 11A, 11B upon detecting a bed exit.

If the bedroom light 11A is off, operation of the bedroom switch 12A may switch on the bedroom light 12A, or alternatively both lights 12A, 12B. If the bathroom light 11B is off, operation of the bathroom switch 12B may switch on the bathroom light 12B, or alternatively both lights 12A, 12B. If a light source device 11A, 11b is switched on during daytime as determined by the ambient light sensor 22, the brightness of the light source device 11A, 11B is set to maximum level.

If a light source device 11A, 11b is switched on during nighttime as determined by the ambient light sensor 22, the brightness of the light source device 11A, 11B is set to sub-maximum level. However, if the user desires full brightness nevertheless, the corresponding switch device 12A, 12B can be designed to control the corresponding light source device 11A, 11B to full brightness upon further actuation of the switch 40. For example, if a user actuates the switch 12B during nighttime as determined by the ambient light sensor 22 in order to switch the bathroom light 11B on, the brightness of the bathroom light 11B is set to sub-maximum level. However, if the user actuates the switch 12B again in the same manner, for example by pressing its "on" area as described above, the brightness of the light source device 11A, 11B is set to maximum level. More generally, the switch devices 12A, 12B can be deigned such that repeated operation of the switch 40 by the user increases or decreases the brightness of the corresponding light source devices 11A, 11B.

Other possibilities to set the light source devices 11A, 11B to maximum brightness during nighttime are possible. For example, the switch device 12A, 12B could comprise a separate further switch, like a push button switch, having the function to set the corresponding light source devices 11A, 11B to maximum brightness during nighttime.

## Claims

1. A lighting system (10) for use in a building like private home, nursing home, retirement home or hospital, in particular for elderly people, wherein the lighting system comprises
- at least one light source device (11A, 11B) comprising or connectable to a light emitter (19), said at least one light source device (11A, 11B) comprising a wireless receiver (17);
- at least one bed exit sensing device (13) to be placed in a bed and adapted to detect a person leaving the bed, said bed exit sensing device (13) comprising a wireless transmitter (31) to control the at least one light source device (11A, 11B) through wireless transmission in response to detecting a person leaving the bed, in order to switch on said light source device (11A, 11B), **characterized in** thai the lighting system further comprises
- at least one switch device (12B) adapted to be mounted over a wall-mounted light switch (56), after the wall-mounted light switch (56) has been put in "on" position, such that the wall-mounted light switch (56) cannot be operated any longer, the at least one switch device (12B) comprising a switch (40) and a wireless transmitter (42) to control the at least one light source device (11A, 11B) through wireless transmission in response to operating said switch, in order to switch on or off said light source device (11A, 11B) .

2. The lighting system (10) as claimed in claim 1, wherein the lighting system (10) comprises at least one further switch device (12A) comprising a further switch (40) and a further wireless transmitter (42) to control the at least one light source device (11A, 11B) through wireless transmission in response to operating said switch (40), in order to switch off said light source device (11A, 11B) .

3. The lighting system as claimed in any one of the preceding claims, wherein repeated operation of the switch (40) by the user increases or decreases the brightness of the corresponding light source device (11A, 11B) .

4. The lighting system as claimed in any one of the preceding claims, wherein the lighting system comprises a plurality of the light source devices (11A, 11B).

5. The lighting system as claimed in any one of the preceding claims, wherein the at least one switch device (12A, 12B) comprises a master switch device (12A) adapted to control all of the plurality of light source devices (11A, 11B).

6. The lighting system as claimed in any one of the preceding claims, wherein the at least one switch device (12A, 12B) comprises a slave switch device (12B) adapted to control only one or a sub-group (11B) of said at least one light source devices (11A, 11B).

7. The lighting system as claimed in any one of the preceding claims, wherein the lighting system (10) comprises at least one ambient light sensor (22), wherein the brightness of the at least one light source device (11A, 11B), if the light source device (11A, 11B) is turned on, is controlled depending on the ambient light intensity provided by the at least one ambient light sensor (22).

8. The lighting system as claimed in claim 7, wherein the brightness of the at least one light source device (11A, 11B), if the light source device (11A, 11B) is turned on, is controlled to a sub-maximum level in case the ambient light intensity provided by the at least one ambient light sensor (22) falls below a threshold.

9. The lighting system as claimed in any one of the preceding claims, wherein the at least one bed exit sensing device (13) and/or the at least one switch device (12A, 12B) is a battery (32, 41) powered wireless device.

10. The lighting system as claimed in claim 9 wherein the lighting system comprises an optical indicator (44) adapted to indicate when the charge level of the at least one battery (32, 41) falls below a threshold.

11. The lighting system as claimed in claim 10, wherein the optical indicator (44) is arranged in one of the at least one switch device (12A).

12. The lighting system as claimed in any one of the preceding claims, wherein said transmitters (31, 42) and receiver (17) communicate to each other via Bluetooth protocol and/or are connected to each other in a Bluetooth Mesh.

13. The lighting system as claimed in any one of the preceding claims, wherein each light source device (11A, 11B) comprises a base part (14A, 14B), wherein the base part (14A, 14B) comprises an electrical connector or plug (15) to be connected to a ceiling or wall mounted electric socket (16).

## Patentansprüche

1. Ein Beleuchtungssystem (10) zur Verwendung in einem Gebäude wie einem Privathaus, einem Pflegeheim, einem Altenheim oder einem Krankenhaus, insbesondere für ältere Menschen, wobei das Beleuchtungssystem umfasst:
- wenigstens eine Lichtquellenvorrichtung (11A, 11B), die einen Lichtstrahler (19) umfasst oder mit ihm verbunden werden kann, wobei die wenigstens eine Lichtquellenvorrichtung (11A, 11B) einen drahtlosen Empfänger (17) umfasst;
wenigstens eine Bettflucht-Erfassungsvorrichtung (13), die in einem Bett angeordnet werden kann und dafür ausgelegt ist zu detektieren, dass eine Person das Bett verlässt, wobei die Bettflucht-Erfassungsvorrichtung (13) einen drahtlosen Sender (31) zum Steuern der wenigstens einen Lichtquellenvorrichtung (11A, 11B) durch drahtlose Übertragung als Reaktion auf das Detektieren, dass eine Person das Bett verlässt, um die Lichtquellenvorrichtung (11A, 11B) einzuschalten, umfasst, **dadurch gekennzeichnet, dass** das Beleuchtungssystem ferner umfasst:
- wenigstens eine Schaltervorrichtung (12B), die dafür ausgelegt ist, über einem an der Wand angebrachten Lichtschalter (56) angebracht zu werden, wobei, nachdem der an der Wand angebrachte Lichtschalter (56) in der Weise in die "Ein"-Stellung gebracht worden ist, dass der an der Wand angebrachte Lichtschalter (56) nicht mehr betrieben werden kann, die wenigstens eine Schaltervorrichtung (12B) einen Schalter (40) und einen drahtlosen Sender (42) zum Steuern der wenigstens einen Lichtquellenvorrichtung (11A, 11B) durch drahtlose Übertragung als Reaktion auf das Betätigen des Schalters, um die Lichtquellenvorrichtung (11A, 11B) ein- oder auszuschalten, umfasst.

2. Das Beleuchtungssystem (10) nach Anspruch 1, wobei das Beleuchtungssystem (10) wenigstens eine weitere Schaltervorrichtung (12A) umfasst, die einen weiteren Schalter (40) und einen weiteren drahtlosen Sender (42) zum Steuern der wenigstens einen Lichtquellenvorrichtung (11A, 11B) durch drahtlose Übertragung als Reaktion auf das Betätigen des Schalters (40), um die Lichtquellenvorrichtung (11A, 11B) auszuschalten, umfasst.

3. Das Beleuchtungssystem nach einem der vorhergehenden Ansprüche, wobei die wiederholte Betätigung des Schalters (40) durch den Benutzer die Helligkeit der entsprechenden Lichtquellenvorrichtung (11A, 11B) erhöht oder verringert.

4. Das Beleuchtungssystem nach einem der vorhergehenden Ansprüche, wobei das Beleuchtungssystem mehrere der Lichtquellenvorrichtungen (11A, 11B) umfasst.

5. Das Beleuchtungssystem nach einem der vorhergehenden Ansprüche, wobei die wenigstens eine Schaltervorrichtung (12A, 12B) eine Master-Schaltervorrichtung (12A) umfasst, die dafür ausgelegt ist, alle der mehreren Lichtquellenvorrichtungen (11A, 11B) zu steuern.

6. Das Beleuchtungssystem nach einem der vorhergehenden Ansprüche, wobei die wenigstens eine Schaltervorrichtung (12A, 12B) eine Slave-Schaltervorrichtung (12B) umfasst, die dafür ausgelegt ist, nur einen oder eine Untergruppe (11B) der wenigstens einen Lichtquellenvorrichtungen (11A, 11B) zu steuern.

7. Das Beleuchtungssystem nach einem der vorhergehenden Ansprüche, wobei das Beleuchtungssystem (10) wenigstens einen Umgebungslichtsensor (22) umfasst, wobei die Helligkeit der wenigstens einen Lichtquellenvorrichtung (11A, 11B) in Abhängigkeit von der durch den wenigstens einen Umgebungslichtsensor (22) bereitgestellten Umgebungslichtstärke gesteuert wird, falls die Lichtquellenvorrichtung (11A, 11B) eingeschaltet ist.

8. Das Beleuchtungssystem nach Anspruch 7, wobei die Helligkeit der wenigstens einen Lichtquellenvorrichtung (11A, 11B) auf einen Pegel unter dem maximalen gesteuert wird, falls die durch den wenigstens einen Umgebungslichtsensor (22) bereitgestellte Umgebungslichtstärke unter einen Schwellenwert fällt, falls die Lichtquellenvorrichtung (11A, 11B) eingeschaltet ist.

9. Das Beleuchtungssystem nach einem der vorhergehenden Ansprüche, wobei die wenigstens eine Bettflucht-Erfassungsvorrichtung (13) und/oder die wenigstens eine Schaltervorrichtung (12A, 12B) eine durch Batterie (32, 41) betriebene drahtlose Vorrichtung ist.

10. Das Beleuchtungssystem nach Anspruch 9, wobei das Beleuchtungssystem einen optischen Indikator (44) umfasst, der dafür ausgelegt ist anzugeben, wenn der Ladezustand der wenigstens einen Batterie (32, 41) unter einen Schwellenwert fällt.

11. Das Beleuchtungssystem nach Anspruch 10, wobei der optische Indikator (44) in einer der wenigstens einen Schaltervorrichtungen (12A) angeordnet ist.

12. Das Beleuchtungssystem nach einem der vorhergehenden Ansprüche, wobei die Sender (31, 42) und Empfänger (17) über das Bluetooth-Protokoll miteinander kommunizieren und/oder in einem Bluetooth-Mesh miteinander verbunden sind.

13. Das Beleuchtungssystem nach einem der vorhergehenden Ansprüche, wobei jede Lichtquellenvorrichtung (11A, 11B) ein Sockelteil (14A, 14B) umfasst, wobei das Sockelteil (14A, 14B) einen elektrischen Verbinder oder Stecker (15), um es mit einer an der Decke oder an der Wand angebrachten elektrischen Steckdose (16) zu verbinden, umfasst.

## Revendications

1. Un système d'éclairage (10) destiné à être utilisé dans un bâtiment tel qu'une résidence privée, une maison de soins infirmiers, une maison de retraite ou un hôpital, en particulier pour les personnes âgées, dans lequel le système d'éclairage comprend
- au moins un dispositif source de lumière (11A, 11B) comprenant ou pouvant être connecté à un émetteur de lumière (19), ledit au moins un dispositif source de lumière (11A, 11B) comprenant un récepteur sans fil (17) ;
- au moins un dispositif de détection de sortie de lit (13) à placer dans un lit et conçu pour détecter une personne quittant le lit, ledit dispositif de détection de sortie de lit (13) comprenant un émetteur sans fil (31) pour commander le au moins un dispositif source de lumière (11A, 11B) par transmission sans fil en réponse à la détection d'une personne quittant le lit, afin d'allumer ledit dispositif source de lumière (11A, 11B), **caractérisé en ce que** le système d'éclairage comprend en outre
- au moins un dispositif interrupteur (12B) conçu pour être monté sur un interrupteur d'éclairage mural (56), après que l'interrupteur d'éclairage mural (56) a été mis en position « marche », de sorte que l'interrupteur d'éclairage mural (56) ne puisse plus être actionné, le au moins un dispositif interrupteur (12B) comprenant un interrupteur (40) et un émetteur sans fil (42) pour commander le au moins un dispositif source de lumière (11A, 11B) par transmission sans fil en réponse à l'actionnement dudit interrupteur, afin d'allumer ou d'éteindre ledit dispositif source de lumière (11A, 11B).

2. Le système d'éclairage (10) selon la revendication 1, dans lequel le système d'éclairage (10) comprend au moins un autre dispositif interrupteur (12A) comprenant un autre interrupteur (40) et un autre émetteur sans fil (42) pour commander le au moins un dispositif source de lumière (11A, 11B) par transmission sans fil en réponse à l'actionnement dudit interrupteur (40), afin d'éteindre ledit dispositif source de lumière (11A, 11B).

3. Le système d'éclairage selon l'une quelconque des revendications précédentes, dans lequel l'actionnement répété de l'interrupteur (40) par l'utilisateur augmente ou diminue la luminosité du dispositif source de lumière correspondant (11A, 11B).

4. Le système d'éclairage selon l'une quelconque des revendications précédentes, dans lequel le système d'éclairage comprend une pluralité des dispositifs sources de lumière (11A, 11B).

5. Le système d'éclairage selon l'une quelconque des revendications précédentes, dans lequel le au moins un dispositif interrupteur (12A, 12B) comprend un dispositif interrupteur principal (12A) conçu pour commander l'ensemble de la pluralité de dispositifs sources de lumière (11A, 11B).

6. Le système d'éclairage selon l'une quelconque des revendications précédentes, dans lequel le au moins un dispositif interrupteur (12A, 12B) comprend un dispositif interrupteur esclave (12B) conçu pour commander seulement un ou un sous-groupe (11B) dudit au moins un dispositif source de lumière (11A, 11B).

7. Le système d'éclairage selon l'une quelconque des revendications précédentes, dans lequel le système d'éclairage (10) comprend au moins un capteur de lumière ambiante (22), dans lequel la luminosité du au moins un dispositif source de lumière (11A, 11B), si le dispositif source de lumière (11A, 11B) est allumé, est commandée en fonction de l'intensité de la lumière ambiante fournie par le au moins un capteur de lumière ambiante (22).

8. Le système d'éclairage selon la revendication 7, dans lequel la luminosité du au moins un dispositif source de lumière (11A, 11B), si le dispositif source de lumière (11A, 11B) est allumé, est commandée à un niveau sous-maximum dans le cas où l'intensité de la lumière ambiante fournie par le au moins un capteur de lumière ambiante (22) tombe en dessous d'un seuil.

9. Le système d'éclairage selon l'une quelconque des revendications précédentes, dans lequel le au moins un dispositif de détection de sortie de lit (13) et/ou le au moins un dispositif interrupteur (12A, 12B) est un dispositif sans fil alimenté par batterie (32, 41).

10. Le système d'éclairage selon la revendication 9, dans lequel le système d'éclairage comprend un indicateur optique (44) conçu pour indiquer quand le niveau de charge de la au moins une batterie (32, 41) tombe en dessous d'un seuil.

11. Le système d'éclairage selon la revendication 10, dans lequel l'indicateur optique (44) est agencé dans l'un du au moins un dispositif interrupteur (12A).

12. Le système d'éclairage selon l'une quelconque des revendications précédentes, dans lequel lesdits émetteurs (31, 42) et récepteur (17) communiquent entre eux via le protocole Bluetooth et/ou sont connectés l'un à l'autre dans un maillage Bluetooth.

13. Le système d'éclairage selon l'une quelconque des revendications précédentes, dans lequel chaque dispositif source de lumière (11A, 11B) comprend une partie de base (14A, 14B), dans lequel la partie de base (14A, 14B) comprend un connecteur électrique ou une fiche (15) à connecter à une prise électrique murale ou au plafond (16).
